# EUROPEAN PATENT APPLICATION

(11) **EP 4 368 322 A1**
(43) Date of publication of application: **15.05.2024**
(21) Application number: 21949263.4
(22) Date of filing: 06.07.2021
(51) Int. Cl.: B23B 1/00, G05B 19/4069, G05B 19/4093, B23Q 17/00

(54) **DISPLAY DEVICE, MACHINE TOOL AND DISPLAY METHOD**

(71) Applicant: DMG Mori Co., Ltd., Yamatokoriyama-shi, Nara 639-1160 (JP)
(72) Inventor: IIYAMA, Koji, Yamatokoriyama-shi, Nara 639-1160 (JP)
(74) Representative: Dantz, Jan Henning
(86) International application number: PCT/JP2021/025472
(87) International publication number: WO 2023/281627

(57) **Abstract**

A disclosed display device 14 includes an input unit 15 for entering an input parameter for vibration cutting, and a display unit 16 for showing a graph showing an allowable value for a setting parameter for vibration cutting based on the input parameter, wherein the input parameter includes at least one of a vibration frequency rate, a vibration amplitude rate, and a vibration direction, and the setting parameter includes a revolution number of a workpiece 20 or a tool 30, and a feeding speed of the workpiece 20 or the tool 30. This allows easy determination on the setting parameters for vibration cutting.

## Description

### [Technical Field]

The present disclosure relates to a display device, a machine tool, and a display method.

### [Background Art]

Conventionally, a technique has been known: in this technique, a workpiece is turned while vibrating a tool in a feed direction to segment swarf generated in turning in a machine tool having a turning function (also called vibration cutting) (e.g., Patent Literature 1).

### [Citation List]

### [Patent Literature]

PLT1: Japanese Laid-Open Patent Publication No. 2020-112985

### [Summary of Invention]

### [Technical Problem]

Meanwhile, there are a plurality of variable parameters in vibration cutting, such as a period and a width of the tool vibration. Operators have to determine setting parameters such as the speed of tool feeding based on the plurality of variable parameters. However, because there are a plurality of variable parameters, determination of such setting parameters is not easy. Under such circumstances, a purpose of the present disclosure is to easily determine the setting parameters for vibration cutting.

### [Technical Solution]

An aspect of the present disclosure relates to a display device. The display device includes an input unit for entering an input parameter for vibration cutting, and a display unit for displaying a graph showing an allowable value for a setting parameter for vibration cutting based on the input parameter, wherein the input parameter includes at least one of a vibration frequency rate, a vibration amplitude rate, and a vibration direction, and the setting parameter includes a revolution number of a workpiece or a tool, and a feeding speed of the workpiece or the tool.

Another aspect of the present disclosure relates to a machine tool. The machine tool includes the above-described display device.

Another aspect of the present disclosure relates to a display method. The display method includes an entering step for entering an input parameter for vibration cutting, and a display step for displaying a graph showing an allowable value for a setting parameter for vibration cutting based on the input parameter, wherein the input parameter includes at least one of a vibration frequency rate, a vibration amplitude rate, and a vibration direction, and the setting parameter includes a revolution number of a workpiece or a tool, and a feeding speed of the workpiece or the tool.

### [Advantageous Effects]

With the present disclosure, setting parameters for vibration cutting can be easily determined.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a block diagram illustrating a configuration of a machine tool of the present disclosure.
[FIG. 2] FIG. 2 is an oblique view schematically illustrating vibration cutting.
[FIG. 3] FIG. 3 is a graph showing tool paths in vibration cutting under certain conditions.
[FIG. 4] FIG. 4 is a graph showing tool paths in vibration cutting under other conditions.
[FIG. 5] FIG. 5 is a graph showing tool paths in vibration cutting under still other conditions.
[FIG. 6] FIG. 6 is an example of a graph of setting parameters shown on a display unit.

### [Description of Embodiments]

Embodiments of the display device, the machine tool, and the display method of the present disclosure are described below with reference to examples. The present disclosure, however, is not limited to the following examples. In the description below, specific numeral values and materials are given as examples, but other numeral values and materials can be used as long as effects of the present disclosure can be achieved.

### (Display device)

A display device of the present disclosure includes an input unit and a display unit. The display device may be configured with, for example, a touchscreen type control panel.

The input unit is an element for entering an input parameter for vibration cutting. The input unit may display an input screen for an operator to use upon entering the input parameter.

The display unit shows a graph showing allowable values for setting parameters for vibration cutting based on the input parameter. The graph may be a two-dimensional graph, or may be a three-dimensional graph.

The input parameter includes at least one of a vibration frequency rate, a vibration amplitude rate, and a vibration direction. For example, the input parameter may include the vibration frequency rate and the vibration amplitude rate, or the vibration frequency rate, the vibration amplitude rate, and the vibration direction.

The vibration frequency rate means the vibration number of the workpiece or tool per one rotation of the workpiece or tool. For example, when the vibration frequency rate is 0.5, the workpiece or tool vibrates once for every two rotations of the workpiece or the tool.

The vibration amplitude rate means a ratio of an amplitude of the workpiece or tool relative to an amount of feed per one rotation of the workpiece or the tool. For example, when the vibration amplitude rate is 1.5, the workpiece or tool vibrates at a peak-to-peak amplitude of 1.5 times the amount of feed per one rotation of the workpiece or tool.

The vibration direction means a direction in which the workpiece or tool vibrates. For example, when feed operation is performed only in the X-axis direction, the X-axis direction may be entered as the vibration direction. Meanwhile, for example, when feed operation is performed biaxially in the X-axis direction and the Z-axis direction, a principal component direction in the feed operation (e.g., X-axis direction when the amount of feed in the X-axis direction is greater than the amount of feed in the Z-axis direction) may be entered as the vibration direction.

The setting parameter includes a revolution number of the workpiece or tool, and a feeding speed of the workpiece or tool. The allowable values for the revolution number and the feeding speed of the workpiece or tool both tend to decrease as the vibration frequency rate or vibration amplitude rate increases. Furthermore, the allowable values for the revolution number and the feeding speed of the workpiece or tool may decrease or increase according to the differences in the vibration direction depending on the structure of the machine tool including the display device.

In the present disclosure, based on the relationship between such input parameters and setting parameters, when an input parameter is entered, the display unit shows a graph showing allowable values for the setting parameters accordingly. By seeing the graph, the operator can easily determine suitable setting parameters in accordance with the input parameter entered by the operator. The "allowable value" may be a benchmark for determining setting parameters so that the machining precision of the workpiece or the load on the machine tool is within a predetermined range.

The display device may further include a memory unit, in which a plurality of input patterns of the input parameters are stored. At the input unit, the input parameters may be entered by selecting one input pattern from the plurality of input patterns. The plurality of input patterns may be input patterns corresponding to frequently used combinations selected from, for example, countless combinations of input parameters. By selecting one input pattern from such a plurality of input patterns, the operator can easily determine, not only setting parameters, but also input parameters.

The input parameter may also include a load factor of a motor that allows feeding of the workpiece or tool included in the machine tool for performing vibration cutting. The load factor of a motor is a ratio of a motor output in feed operation relative to the rated output of the motor. The allowable values for the revolution number and the feeding speed of the workpiece or tool both tend to increase as the load factor of the motor increases. When the input parameters include the load factor of the motor, the graph of the setting parameters can be shown in view of such tendency.

The graph may show setting parameters such that the average value of the electric current is within a range that does not exceed 100% of the rated output, the electric current flowing in the motor that allows feeding of the workpiece or tool, and that is included in the machine tool for performing vibration cutting. By determining setting parameters from such a range, vibration cutting can be performed without excessive load on the motor.

### (Machine tool)

A machine tool of the present disclosure is a machine tool for performing vibration cutting, and includes the above-described display device. Thus, by seeing the graph of setting parameters shown on the display unit, operators of the machine tool can suitably and easily determine setting parameters for vibration cutting in accordance with the input parameter entered by the operator. By vibration cutting the workpiece based on the determined setting parameters, vibration cutting can be performed with flexible and suitable conditions in accordance with the situation.

### (Display method)

A display method of the present disclosure includes an entering step and a displaying step.

In the entering step, an input parameter for vibration cutting is entered. The entering may be performed by a computer that received commands from the operator. The input parameter includes at least one of a vibration frequency rate, a vibration amplitude rate, and a vibration direction.

In the displaying step, a graph showing allowable values for setting parameters for vibration cutting based on the input parameter is shown. This displaying may be performed by the above-described computer through an arbitrary display device. The setting parameter includes a revolution number of the workpiece or tool, and a feeding speed of the workpiece or tool.

With such a display method, the operator of the machine tool can easily determine suitable setting parameters in accordance with the input parameter by seeing the graph shown.

As described above, with the present disclosure, the operator of the machine tool can easily determine the setting parameters for vibration cutting by seeing the graph shown on the display unit. Furthermore, with the present disclosure, in accordance with changes in the input parameter, a graph showing suitable setting parameters can be shown.

In the following, examples of the display device, the machine tool, and the display method of the present disclosure are described in detail with reference to the drawings. For the elements and steps of exemplary display device, machine tool, and display method described below, the above-described elements and steps can be applied. The elements and steps of exemplary display device, machine tool, and display method described below can be changed based on the description above. Also, the matters described below can be applied to the above-described embodiments. Of the elements and steps of exemplary display device, machine tool, and display method described below, the elements and steps that are not essential to the display device, machine tool, and display method of the present disclosure can be omitted. The figures shown below are schematic, and do not accurately represent shapes and numbers of actual members.

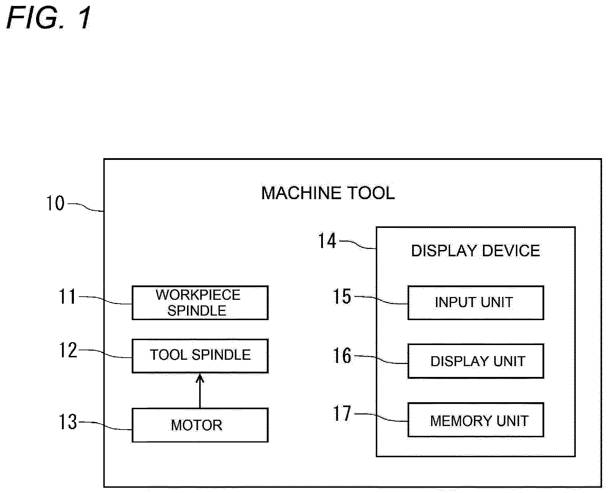

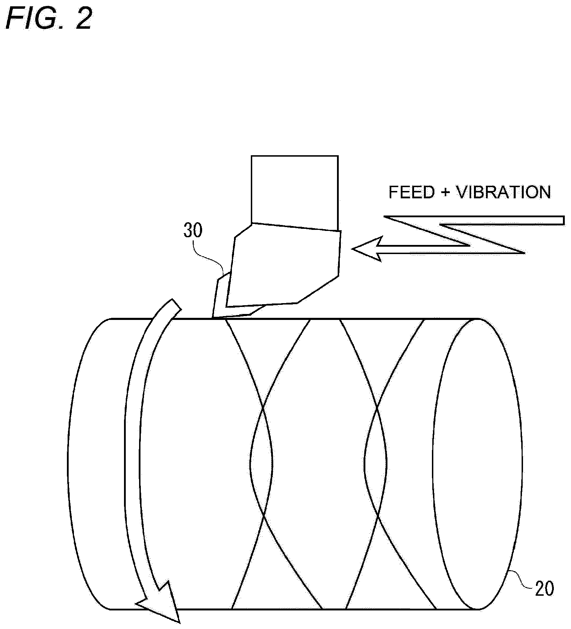

A machine tool 10 of this embodiment is a turning center, but it is not limited thereto. As shown in FIG. 1, the machine tool 10 includes a workpiece spindle 11, a tool spindle 12, a motor 13, and a display device 14. As shown in FIG. 2 to FIG. 5, the machine tool 10 can perform vibration cutting, in which a workpiece is machined by superimposing a low-frequency (about several tens of Hz) vibration to feed operation of the tool spindle 12. The machine tool 10 may be a type of machine tool that allows feeding of the workpiece spindle 11.

The workpiece spindle 11 holds a workpiece 20 (ref: FIG. 2), which is a machining target. The workpiece spindle 11 allows the workpiece 20 to rotate around a predetermined central axis during machining of the workpiece 20.

The tool spindle 12 holds a tool 30 (ref: FIG. 2) used for machining of the workpiece 20. The tool spindle 12 is capable of moving three-dimensionally in a machining space. The tool spindle 12 brings a blade of the tool 30 into contact with the workpiece 20 during machining of the workpiece 20.

The motor 13 is a servomotor that allows feeding of the tool 30 (or the tool spindle 12). The motor 13 may allow feeding of the tool 30 by driving a drive (not shown) of the tool spindle 12 based on the torque generated in correspondence with a flowing electric current. The motor 13 superimposes a low-frequency vibration onto the feed operation of the tool 30 when performing vibration cutting. In FIG. 2, a movement path of the tool 30 in vibration cutting is schematically shown at a circumferential surface of the workpiece 20.

The display device 14 receives an input of an input parameter for vibration cutting, and shows a graph showing allowable values for setting parameters for vibration cutting to the operator. The display device of this embodiment is configured with a touchscreen type control panel, but it is not limited thereto. The display device 14 has an input unit 15, a display unit 16, and a memory unit 17. The memory unit 17 may be integrated with the input unit 15 and the display unit 16, or may be a separate unit included in a remote server.

The input unit 15 is an element for entering an input parameter for vibration cutting. The input unit 15 is configured with a screen of a control panel. The input unit 15 shows an input screen used for entering an input parameter. The input screen may include at least one input window for entering respective input parameters.

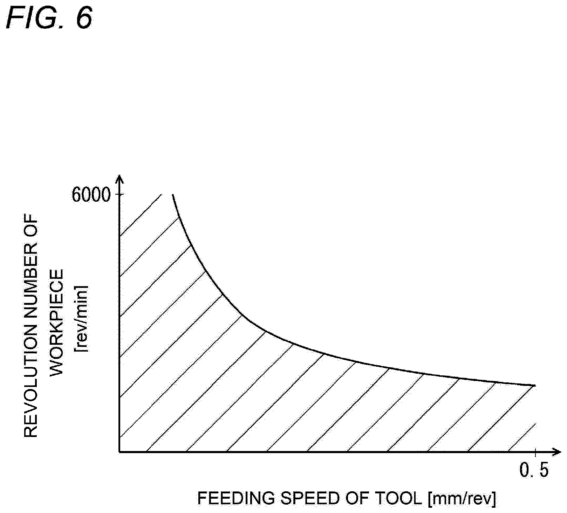

The display unit 16 shows a graph showing allowable values for setting parameters for vibration cutting based on the input parameter. The graph of this embodiment is a two-dimensional graph, as shown in FIG. 6, but it is not limited thereto.

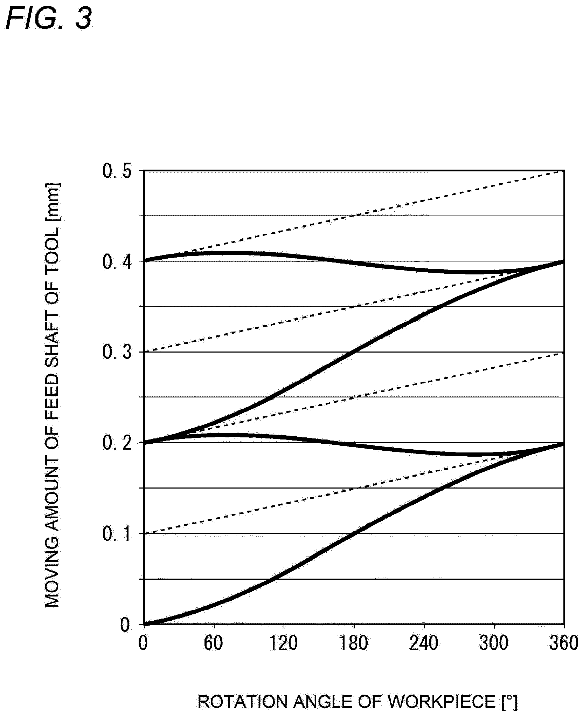

The input parameter includes a vibration frequency rate, a vibration amplitude rate, a vibration direction, and a load factor of a motor 13. Differences in the tool path when the vibration frequency rate and the vibration amplitude rate are changed are described with reference to FIG. 3 to FIG. 5.

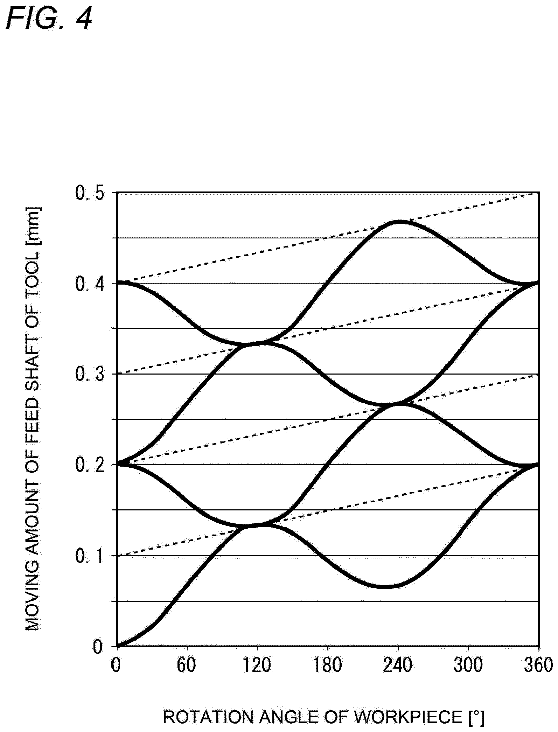

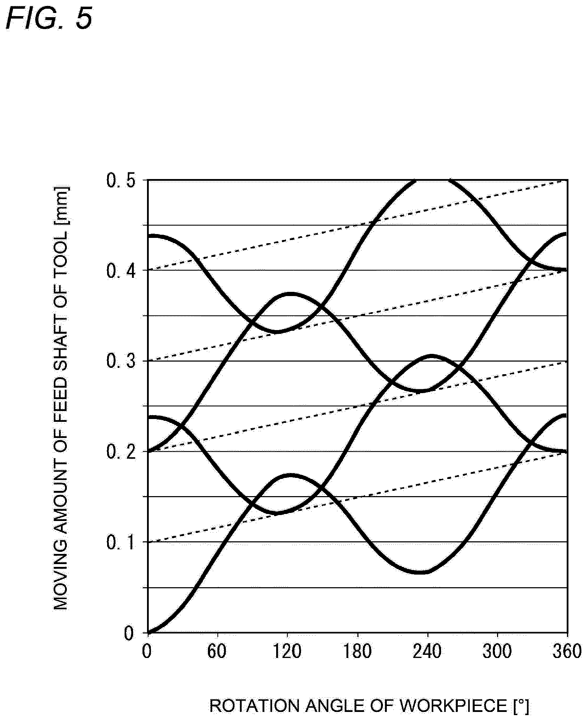

FIG. 3 shows tool paths on the surface of the workpiece with solid lines when the vibration frequency rate is 0.5 and the vibration amplitude rate is 1.0. In FIG. 3, the horizontal axis shows a rotation angle (unit: °) of the workpiece 20, the vertical axis shows an amount of movement of the feed shaft (unit: mm) of the tool 30, and the broken line shows tool paths when vibration is not superimposed (also in FIG. 4 and FIG. 5). As shown in FIG. 3, the tool 30 vibrates 0.5 times for every one rotation of the workpiece 20, and the tool 30 vibrates with an amplitude equivalent to an amount of feed (up-down distance between the broken lines next to each other) of the tool 30 for every one rotation of the workpiece 20. Swarf generated when turning is cut at a point where the tool paths cross each other.

FIG. 4 shows tool paths on the surface of the workpiece with solid lines when the vibration frequency rate is 1.5 and the vibration amplitude rate is 1.0. As shown in FIG. 4, the tool 30 vibrates 1.5 times for every one rotation of the workpiece 20, and the tool 30 vibrates with an amplitude equivalent to the amount of feed of the tool 30 for every one rotation of the workpiece 20. Swarf generated when turning is cut at a point where the tool paths cross.

FIG. 5 shows tool paths on the surface of the workpiece with solid lines when the vibration frequency rate is 1.5 and the vibration amplitude rate is 1.4. As shown in FIG. 5, the tool 30 vibrates 1.5 times for every one rotation of the workpiece 20, and the tool 30 vibrates with an amplitude larger than the amount of feed of the tool 30 for every one rotation of the workpiece 20. Swarf generated when turning is cut at a point where the tool paths cross.

The setting parameter includes a revolution number of the workpiece 20, and a feeding speed of the tool 30. When the tool 30 is a tool that performs feed operation and rotation operation (e.g., drill), the setting parameter includes a revolution number of the tool 30 and a feeding speed of the tool 30.

The memory unit 17 stores a plurality of input patterns of the input parameter. The memory unit 17 may be configured with a nonvolatile memory. The information on the plurality of input patterns may be shown on the input unit 15, for example, by request from an operator. The operator can easily enter the input parameter for vibration cutting by selecting one input pattern from the plurality of input patterns.

FIG. 6 shows an example of a graph shown on the display unit 16. In FIG. 6, the horizontal axis shows a feeding speed (unit: mm /rev) of the tool 30, and the vertical axis shows a revolution number (unit: rev/min) of the workpiece 20. The curve shown in FIG. 6 as an example corresponds to a case when the vibration frequency rate is 0.5, the vibration amplitude rate is 0.6, the vibration direction is a Z-axis direction (direction along the central axis of the workpiece spindle 11), and the load factor of the motor 13 is 100%. That is, the graph of FIG. 6 shows setting parameters (setting parameters in a region lower than the curve) in a range by which the average value of the electric current flowing in the motor 13 does not exceed the rated output of 100%. Then, the region lower than the curve (region shown with hatching in FIG. 6) is the region of the setting parameter by which vibration cutting can be performed while ensuring machining precision in the machine tool 10. The operator visually grasps this region, and then suitably determines the setting parameters from therein.

The curve shown in the graph can be made by obtaining a plurality of combinations of a revolution number and a feeding speed allowing stable performance of vibration cutting, relative to combinations of respective input parameters, and approximating the plurality of combinations as a quadratic curve. This method is just an example, and the curve may be made by other methods.

The exemplary curve shown in FIG. 6 tends to shift toward a lower left side (origin side) when the vibration frequency rate and the vibration amplitude rate are greater. This is because with greater numeric values for both of these parameters, the load caused by the superimposing gets greater. Furthermore, the curve tends to shift toward the lower left side when the load factor of the motor 13 is lower.

### -Display method -

A display method of the present disclosure that can be performed using the above-described display device 14 is described. The display method includes an input step and a display step.

In the input step, the operator enters input parameters for vibration cutting. The input parameter includes a vibration frequency rate, a vibration amplitude rate, a vibration direction, and a load factor of a motor 13. The operator may enter the input parameter through a display screen of a touchscreen type control panel included in the machine tool 10.

In the display step, the display unit 16 shows a graph for setting parameters for vibration cutting based on the input parameter. The graph may be, for example, a type of graph shown in FIG. 6, or may be other types of graph. The setting parameter includes a revolution number of the workpiece 20, and a feeding speed of the tool 30.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

The present disclosure can be used for a display device, a machine tool, and a display method.

### [Reference Signs List]

10: machine tool
11: workpiece spindle
12: tool spindle
13: motor
14: display device
15: input unit
16: display unit
17: memory unit
20: workpiece
30: tool

## Claims

1. A display device comprising: an input unit for entering an input parameter for vibration cutting, and
a display unit for showing a graph showing an allowable value for a setting parameter for vibration cutting based on the input parameter, wherein
the input parameter includes at least one of a vibration frequency rate, a vibration amplitude rate, and a vibration direction, and
the setting parameter includes a revolution number of a workpiece or a tool, and a feeding speed of the workpiece or the tool.

2. A display device of claim 1, further comprising a memory unit storing a plurality of input patterns of the input parameter,
wherein in the input unit, the input parameter is entered by selecting one input pattern from the plurality of the input patterns.

3. The display device of claim 1 or 2, wherein the input parameter further includes a load factor of a motor that allows feeding of the workpiece or the tool included in a machine tool for performing vibration cutting.

4. The display device of claim 1 or 2, wherein the graph shows the setting parameter within a range in which an average value of an electric current does not exceed 100% of a rated output, the electric current flowing in a motor that allows feeding of the workpiece or the tool, and that is included in a machine tool for performing vibration cutting.

5. A machine tool for performing vibration cutting, comprising the display device of any one of claims 1 to 4.

6. A display method comprising: an input step for entering an input parameter for vibration cutting, and
a display step for showing a graph showing an allowable value for a setting parameter for vibration cutting based on the input parameter, wherein
the input parameter includes at least one of a vibration frequency rate, a vibration amplitude rate, and a vibration direction, and
the setting parameter includes a revolution number of a workpiece or a tool, and a feeding speed of the workpiece or the tool.
